# EUROPÄISCHE PATENTSCHRIFT

(11) **EP 1 742 718 B1**
(45) Veröffentlichungstag und Bekanntmachung des Hinweises auf die Patenterteilung: **17.03.2010**
(21) Anmeldenummer: 04738477.1
(22) Anmeldetag: 04.05.2004
(51) Int. Cl.: B01D 45/08, B01D 45/10, B01D 53/18, F28C 1/16

(54) **TROPFENABSCHEIDERANORDNUNG**
MIST COLLECTOR ARRANGEMENT
SYSTEME DE PARE-GOUTTES

(43) Veröffentlichungstag der Anmeldung: 17.01.2007
(73) Patentinhaber: Munters Euroform GmbH, 52072 Aachen (DE)
(72) Erfinder: Wolf, Hubert, 40668 Meerbusch (DE)
(74) Vertreter: Hauck Patent- und Rechtsanwälte
(86) Internationale Anmeldenummer: PCT/DE2004/000940
(87) Internationale Veröffentlichungsnummer: WO 2005/107921

(56) Entgegenhaltungen:
- EP-A- 0 747 107
- DE-A- 19 501 282
- US-A- 5 662 721

## Beschreibung

Die vorliegende Erfindung betrifft eine Tropfenabscheideranordnung für Gaswäscher, Kühltürme u.dgl. mit den Merkmalen des Oberbegriffs von Patentanspruch 1.
Es sind Tropfenabscheideranordnungen bekannt, die geneigt angeordnete Reihen von parallelen Tropfenabscheiderprofilen aufweisen. Benachbart zu den unteren Enden der Reihen sind Sammelrinnen zum Auffangen und Abführen der abgeschiedenen Flüssigkeit angeordnet. Mehrere parallel zueinander angeordnete Tropfenabscheiderprofile sind über gemeinsame Seitenwände zu einer Baugruppe zusammengefasst,
wobei die einzelnen Baugruppen über seitliche Kupplungsrohre miteinander verbindbar sind. Des weiteren weisen derartige bekannte Tropfenabscheideranordnungen Trägerbügel zur Lagerung von Spüleinrichtungen zum Spülen der Tropfenabscheiderprofilreihe auf. Die Tropfenabscheiderprofilreihen sind im Betrieb auf einer geeigneten Stützkonstruktion des Gaswäschers, Kühlturmes etc. gelagert.

Aus der EP 0 747 107 A2 ist eine Tropfenabscheideranordnung mit den Merkmalen des Oberbegriffs von Patentanspruch 1 bekannt. Bei der bekannten Anordnung sind die Endwände der Tropfenabscheiderprofilpakete an einer Zwischenkonstruktion befestigt, welche wiederum an der Stützkonstruktion befestigt ist. Die Tragelemente für die Spüleinrichtung sind hierbei an den Endwänden der Tropfenabscheiderprofilpakete angebracht. Bei dieser Ausführungsform müssen daher beim Austausch der Tropfenabscheiderprofilpakete die Endwände von der Zwischenkonstruktion demontiert werden, aber auch die Tragelemente für die Spüleinrichtung von den Endwänden entfernt werden.

Der Erfindung liegt die Aufgabe zugrunde, eine Tropfenabscheideranordnung der angegebenen Art zu schaffen, bei der die Tropfenabscheiderprofilpakete besonders einfach demontiert, montiert, gewartet und gereinigt werden können.

Diese Aufgabe wird erfindungsgemäß bei einer Tropfenabscheideranordnung der angegebenen Art durch die kennzeichnenden Merkmale von Patentanspruch 1 gelöst.

Bei der erfindungsgemäßen Lösung können die Tropfenabscheiderprofile unabhängig von der Zwischenkonstruktion demontiert, montiert, gewartet, gereinigt etc. werden. Hierzu sind mehrere benachbarte Tropfenabscheiderprofile mit Hilfe einer Endwand zu einem Paket zusammengefaßt, und dieses Paket ist mit Hilfe der Endwand an der Seitenwand der Zwischenkonstruktion abnehmbar und in Längsrichtung derselben verschiebbar gelagert. Somit kann zu Wartungszwecken ein Tropfenabscheiderprofilpaket ohne weiteres von der Zwischenkonstruktion abgenommen und entsprechend gewartet, ausgetauscht etc. werden. Die benachbarten Tropfenabscheiderprofilpakete können hierbei auseinandergeschoben werden, da ihre Endwände in Längsrichtung der Seitenwand der Zwischenkonstruktion verschiebbar gelagert sind, so daß das Abnehmen des Tropfenabscheiderprofilpaketes erleichtert wird. Da andererseits die Tropfenabscheiderprofilpakete mit Hilfe ihrer Endwände in Querrichtung im wesentlichen unverschiebbar an der Seitenwand der Zwischenkonstruktion gelagert sind, wird auf diese Weise eine Bewegung der Pakete in Querrichtung vermieden bzw. bei geneigten, dachförmig oder V-förmig angeordneten Profilen eine Veränderung des Neigungswinkels verhindert. Die Seitenwände der Zwischenkonstruktion wirken somit hierbei als Widerlager, die eine Verringerung des Neigungswinkels der Profile verhindern.

Da bei der erfindungsgemäßen Lösung mehrere Tropfenabscheiderprofile zu einem Paket zusammengefaßt sind, wird der Montageaufwand im Vergleich zu der eingangs beschriebenen erfindungsgemäßen Ausführungsform nur geringfügig erhöht, da die Zwischenkonstruktion weiterhin als Einheit montiert wird, wonach die einzelnen Tropfenabscheiderprofilpakete in der vorstehend beschriebenen Weise an der Seitenwand der Zwischenkonstruktion abnehmbar und in Längsrichtung verschiebbar gelagert werden. Benachbarte Tropfenabscheiderpakete werden vorzugsweise so miteinander verbunden, daß diese Verbindung in einfacher Weise manuell gelöst werden kann, beispielsweise über geeignete Klemmeinrichtungen. Wenn daher ein Tropfenabscheiderprofilpaket ausgetauscht werden soll, werden als erstes die Klemmeinrichtungen gelöst, dann die benachbarten Tropfenabscheiderprofilpakete etwas auseinandergeschoben, und schließlich wird das zu wartende Tropfenabscheiderprofilpaket nach oben von der Zwischenkonstruktion bzw. deren Seitenwand abgenommen.

Die Zwischenkonstruktion besitzt im Regelfall zwei Seitenwände. Auch das Tropfenabscheiderprofilpaket ist im Regelfall mit zwei Endwänden versehen, von denen jede in der vorstehend beschriebenen Weise an einer Seitenwand der Zwischenkonstruktion gelagert ist.

Die Anordnung eines Tropfenabscheiderprofilpaketes an der Seitenwand einer Zwischenkonstruktion erfolgt dadurch, daß die betreffende Endwand des Tropfenabscheiderprofilpaketes in eine an der Seitenwand angeordnete Nut, die zur Aufnahme und Führung der Endwand eines Tropfenabscheiderprofilpaketes dient, eingesetzt wird. Diese Nut ist dabei so bemessen, daß sie eine Längsverschiebung der Endwand mit Tropfenabscheiderprofilpaket ermöglicht und auch in Breitenrichtung etwas Spiel aufweist, so daß entsprechenden Materialausdehnungen Rechnung getragen wird, ein einfaches Abnehmen und Wiedereinsetzen ermöglicht wird und letztendlich aber ein Widerlager gegen Verschiebungen der Pakete in Querrichtung vorgesehen wird. Eine derartige Nut an der Seitenwand der Zwischenkonstruktion wird vorzugsweise von einem sich nach innen und dann nach oben erstreckenden Abschnitt der Seitenwand gebildet. Da die Endwand des Tropfenabscheiderprofilpaketes über die Unterkante der Profile nach unten vorsteht, kann der vorstehende Abschnitt der Endwand ohne weiteres in die von der Seitenwand gebildete Nut eingesetzt werden. Normalerweise erfolgt dies auf symmetrische Weise an beiden Enden eines Tropfenabscheiderprofilpaketes.

Ober den Querschnitt eines Gaswäschers gesehen ist vorzugsweise eine Vielzahl von nebeneinander angeordneten Zwischenkonstruktionen vorgesehen, die sich jeweils auf einer geeigneten Stützkonstruktion (Querträgern) des Gaswäschers abstützen. Desweiteren ist über den Querschnitt des Gaswäschers eine Vielzahl von Tropfenabscheiderprofilpaketen angeordnet, die sich an den Seitenwänden der Zwischenkonstruktionen abstützen (abnehmbar und verschiebbar gelagert sind). Es muß dabei nicht unbedingt jeder Zwischenkonstruktion ein Tropfenabscheiderprofilpaket zugeordnet sein. Vielmehr können die Tropfenabscheiderprofilpakete sich in ihrer Breite von der Breite der Zwischenkonstruktionen unterscheiden, d.h. größer oder kleiner als diese ausgebildet sein, so daß die zwischen den Tropfenabscheiderprofilpaketen gebildeten Stöße nicht mit den zwischen den Zwischenkonstruktionen (Seitenwänden) gebildeten Stößen übereinstimmen müssen. Auch können die Tropfenabscheiderprofilpakete versetzt zu den Zwischenkonstruktionen angeordnet sein. Eine besonders bevorzugte Ausführungsform zeichnet sich daher dadurch aus, daß die Stöße der Seitenwände der nebeneinander angeordneten Zwischenkonstruktionen im Abstand von den Stößen der Endwände der nebeneinander angeordneten Tropfenabscheiderprofilpakete vorgesehen sind. Auf diese Weise ergibt sich kein von den Tropfenabscheidern zur Zwischenkonstruktion durchlaufender Stoß, der zu.entsprechenden Flüssigkeitsleckagen führen kann.

Bei einer bevorzugten Ausführungsform der erfindungsgemäßen Lösung weist die Zwischenkonstruktion mindestens einen mit der Seitenwand oder den Seitenwänden der Zwischenkonstruktion verbundenen Querträger auf. Dieser Querträger kann oberhalb und/oder unterhalb des Tropfenabscheiderpaketes angeordnet sein, verbindet die beiden Seitenwände der Zwischenkonstruktion (wenn zwei Seitenwände vorhanden sind), so daß die Zwischenkonstruktion eine Einheit bildet, stabilisiert die Zwischenkonstruktion bzw. die daran angeordneten Tropfenabscheiderprofilpakete und dient zur Lagerung einer Spüleinrichtung für die Tropfenabscheiderprofile, bei der es sich beispielsweise um mit Düsen versehene Rohre zur Zuführung einer geeigneten Spülflüssigkeit handeln kann. Solche Spüleinrichtungen können somit unterhalb und/oder der Tropfenabscheiderprofile angeordnet sein. Wenn ein Querträger oberhalb der Tropfenabscheider angeordnet ist, ist er vorzugsweise an seitlichen vertikalen Stangen befestigt, die sich von den Seitenwänden der Zwischenkonstruktion aus nach oben erstrecken.

Die vorliegende Erfindung betrifft generell die Anordnung von Reihen von parallel zueinander angeordneten Tropfenabscheiderprofilen über eine Zwischenkonstruktion an der Stützkonstruktion eines Gaswäschers, Kühlturmes etc.. Insbesondere betrifft die Erfindung eine Tropfenabscheideranordnung, die zwei übereinander angeordnete Reihen von Tropfenabscheiderprofilen aufweist, von denen die obere Reihe dachförmig und die untere Reihe V-förmig ausgebildet sind. Die Erfindung bezieht sich ferner auf den Fall, bei dem die Tropfenabscheideranordnung zwei übereinander angeordnete Reihen von Tropfenabscheiderprofilen aufweist, von denen die obere Reihe V-förmig und die untere Reihe dachförmig ausgebildet sind. Durch diese speziellen Anordnungen werden besonders gute Reinigungseffekte erzielt, und der Spülwasserverbrauch kann erheblich reduziert werden. Ferner läßt sich mit derartigen Anordnungen eine besonders geringe Bauhöhe erzielen.

Bei einer weiteren Ausführungsform weist die Tropfenabscheideranordnung ebenfalls zwei übereinander angeordnete Reihen von Tropfenabscheiderprofilen auf, die jedoch in diesem Falle eine gemeinsame Zwischenkonstruktion besitzen, welche eine Seitenwand aufweist, an der mindestens die Endwand eines Tropfenabscheiderprofilpaketes einer Reihe abnehmbar und in Längsrichtung der Seitenwand verschiebbar sowie in Querrichtung derselben im wesentlichen unverschiebbar gelagert ist. Bei dieser Ausführungsform können somit sowohl das obere als auch das untere Tropfenabscheiderprofilpaket in der.vorstehend beschriebenen Weise abnehmbar an der Zwischenkonstruktion angeordnet sein. Es kann jedoch auch nur ein Paket abnehmbar angeordnet sein, während das darunter oder darüber angeordnete Paket fest mit der Zwischenkonstruktion verbunden ist. Eine feste Anbringung trifft vorzugsweise auf das untere Paket zu, damit das obere Paket abgenommen und somit das untere Paket auf diese Weise zugänglich gemacht werden kann.

Natürlich können zwei übereinander angeordnete Reihen von Tropfenabscheiderprofilen auch eine einzige Stützkonstruktion besitzen, an der sich die Zwischenkonstruktionen beider übereinander angeordneten Reihen gemeinsam abstützen.

Die entgegengesetzt zueinander geneigten Tropfenabscheiderprofile eines dachfömig oder V-förmig ausgebildeten Paketes sind vorzugsweise über Endplatten lösbar verbunden. Bei einer speziellen Lösung sind die Endplatten der entgegengesetzt geneigten Tropfenabscheiderprofile eines Paketes durch seitliche Verriegelung lösbar aneinander befestigt. Auf diese Weise können auch noch die beiden Hälften eines dachförmig oder V-förmig ausgebildeten Paketes ohne weiteres voneinander getrennt werden, so daß hierdurch die Wartungs- bzw. Austauschmöglichkeiten noch weiter verbessert werden. So können beispielsweise sogar an Ort und Stelle die beiden Hälften eines V-förmig oder dachförmig ausgebildeten Paketes durch seitliches Verschieben voneinander getrennt werden, und es kann eine Hälfte des Paketes ausgetauscht werden, da eine seitliche Verschiebungsmöglichkeit vorgesehen ist. Natürlich kann das Paket auch insgesamt entfernt und an einer anderen Stelle voneinander getrennt werden.

Die spezielle Ausbildung und Anordnung der Spüleinrichtung ist nicht Gegenstand der Erfindung. Hierfür können bekannte Ausgestaltungen Verwendung finden. Gleiches trifft für die Ausgestaltung der einzelnen Tropfenabscheiderprofile zu, die in herkömmlicher Weise, beispielsweise wellenförmig, ausgebildet sein können. Auch in bezug auf die Ausbildung der Zwischenkonstruktion existieren keine Beschränkungen, wenn nur eine Seitenwand und mindestens ein Tragelement für die Spüleinrichtung vorhanden sind. Sowohl die Tropfenabscheiderprofile als auch die Zwischenkonstruktionen sind vorzugsweise aus geeigneten Kunststoffmaterialien gefertigt.

Die Verbindung zwischen den einzelnen Tropfenabscheiderprofilen und der dazugehörigen Endwand eines Paketes erfolgt vorzugsweise durch Verschrauben oder Verschweißen. Auch die Verbindung der einzelnen Elemente der Zwischenkonstruktion (Querstäbe, Seitenwände, Vertikalstäbe) erfolgt vorzugsweise durch Verschrauben. Dabei können mit einer einzigen Schraubverbindung sowohl der Querstab als auch ein Vertikalstab mit einer Seitenwand verbunden werden.

Die Erfindung wird nachfolgend anhand von Ausführungsbeispielen in Verbindung mit der Zeichnung im einzelnen erläutert. Es zeigen:
- Figur 1: eine schematische Seitenansicht einer Tropfenabscheideranordnung mit Stützkonstruktion, Zwischenkonstruktion und einer Reihe von dachförmig angeordneten Tropfenabscheiderprofilen nach dem Stand der Technik;
- Figur 2: eine schematische Seitenansicht einer ersten Ausführungsform der Erfindung;
- Figur 3: eine Seitenansicht einer weiteren Ausführungsform einer erfindungsgemäß ausgebildeten Tropfenabscheideranordnung mit zwei übereinander angeordneten Tropfenabscheiderprofilreihen, die sich eine gemeinsame Zwischenkonstruktion teilen;
- Figur 4: eine Ansicht der Tropfenabscheideranordnung der Figur 2 in Richtung des in Figur 2 dargestellten Pfeiles; und
- Figur 5: eine Seitenansicht noch einer weiteren Ausführungsform einer erfindungsgemäß ausgebildeten Tropfenabscheideranordnung mit zwei übereinander angeordneten Tropfenabscheiderprofilreihen, die sich eine gemeinsame Zwischenkonstruktion teilen.

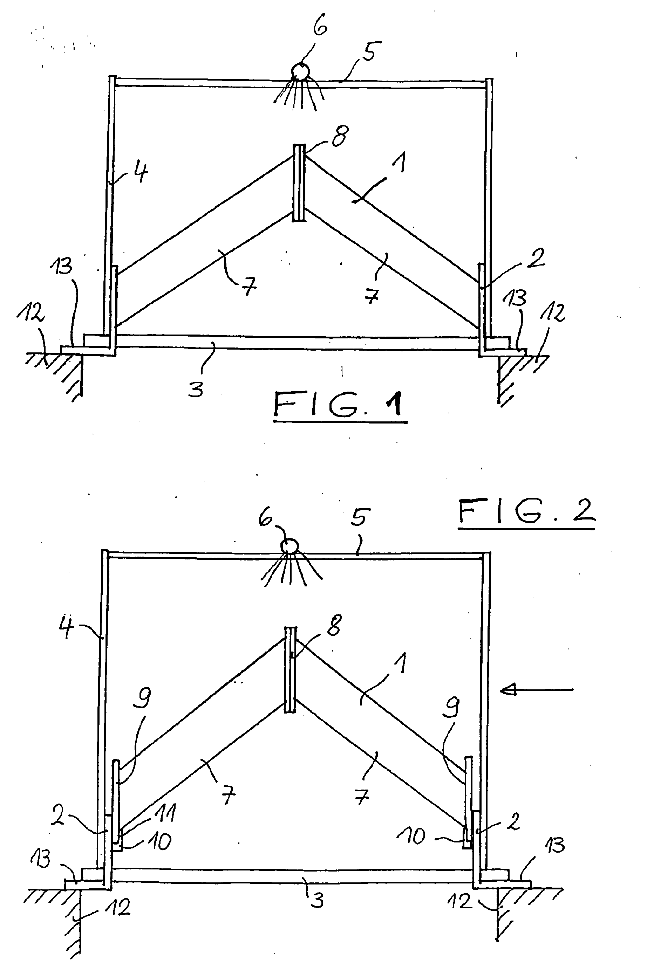

Die in Figur 1 schematisch dargestellte Tropfenabscheideranordnung des Standes der Technik setzt sich aus einer Stützkonstruktion 12, einer Zwischenkonstruktion und einer Reihe 1 von dachförmig angeordneten Tropfenabscheiderprofilen 7 zusammen. Diese Tropfenabscheideranordnung ist beispielsweise in einem Gaswäscher angeordnet und auf Metallträgern einer im Gaswäscher ausgebildeten Stützkonstruktion 12 gelagert. Der Gasstrom ist bei dieser Ausführungsform in der Figur von unten nach oben gerichtet.

Die Reihe 1 der einzelnen Tropfenabscheiderprofile 7, die in der Reihe parallel zueinander angeordnet sind, ist nicht direkt auf der Stützkonstruktion 12 gelagert, sondern mit einer Zwischenkonstruktion verbunden, die zur Lagerung und Stabilisierung der Tropfenabscheiderprofilreihe 1 sowie zur Lagerung einer Spüleinrichtung für die Tropfenabscheider dient, welche in Figur 1 durch ein mit Düsen versehenes Rohr 6 angedeutet ist. Die Zwischenkonstruktion setzt sich aus zwei Seitenwänden 2, mit denen die einzelnen Tropfenabscheiderprofile 7 fest verbunden sind, einem Querstab 3, der als Zugstab für die dachförmig ausgebildete Tropfenabscheiderprofilreihe 1 dient, zwei Vertikalstäben 4, die fest mit den Seitenwänden 2 verbunden sind und sich von diesen nach oben erstrecken, und einer von den Vertikalstäben 4 getragenen Querstange 5 zusammen, auf der das vorstehend erwähnte Düsenrohr 6 angeordnet ist. Diese Zwischenkonstruktion bildet zusammen mit der Reihe 1 der Tropfenabscheiderprofile eine Einheit, die vormontiert wird und als ganzes an der Einbaustelle montiert wird, indem Seitenflansche 13 der Seitenwände 2 auf die Metallträger der Stützkonstruktion 12 gelegt werden. Die gesamte Einheit besteht vorzugsweise aus Kunststoff,
wobei die Einzelteile miteinander verschraubt sind. Die beiden geneigten Lagen der Tropfenabscheiderprofile 7, die die dachförmig ausgebildete Reihe 1 bilden, sind mittig über Endwände 8 aneinander befestigt, beispielsweise ebenfalls durch Verschrauben.

Figur 2 zeigt eine Seitenansicht einer erfindungsgemäß ausgebildeten Tropfenabscheideranordnung. Auch hier ist eine dachförmig ausgebildete Tropfenabscheiderprofilreihe 1 über eine Zwischenkonstruktion auf den Metallträgern einer Stützkonstruktion gelagert, die beispielsweise in einem Gaswäscher angeordnet ist. Die Zwischenkonstruktion weist auch bei dieser Ausführungsform zwei Seitenwände 2, zwei hieran befestigte Vertikalstäbe 4, einen unteren Querstab 3 und eine obere Querstange 5 auf, auf der als Spüleinrichtung ein Düsenrohr 6 gelagert ist. Alle Teile der Zwischenkonstruktion sind fest miteinander verbunden, beispielsweise durch Verschrauben. Auch bei dieser Ausführungsform ist die Zwischenkonstruktion über Seitenflansche 13 der Seitenwände 2 auf den Metallträgern der Stützkonstruktion 12 gelagert.

Die einzelnen Tropfenabscheiderprofile 7 der Tropfenabscheiderprofilreihe 1 sind hierbei jedoch nicht fest mit der Seitenwand 2 der Zwischenkonstruktion verbunden, sondern weisen eine gemeinsame untere Endwand 9 auf, mittels der sie zu einem Tropfenabscheiderprofilpaket zusammengefaßt sind. Die einzelnen Profile sind daher fest mit der unteren Endwand 9 verbunden, beispielsweise durch Verschrauben. Diese Seitenwand 9 ist an der Endwand 2 der Zwischenkonstruktion abnehmbar und in Längsrichtung derselben verschiebbar sowie in Querrichtung derselben im wesentlichen unverschiebbar gelagert. Hierzu besitzt die Seitenwand 2 einen in Figur 2 nach innen vorstehenden und dann nach oben ragenden Ansatz 10, der eine Nut 11 zur Aufnahme eines Teiles der Endwand 9 bildet. Diese Endwand 9 ist in einer Richtung senkrecht zur Zeichnungsebene der Figur 2 verschiebbar gelagert. In Querrichtung bildet die Seitenwand 2 jedoch ein Widerlager, so daß sich das Tropfenabscheiderprofilpaket hieran abstützen kann, um einen von oben einwirkenden Druck aufzufangen.

Bei dieser Ausführungsform ist somit die Tropfenabscheiderprofilreihe 1 abnehmbar an der Zwischenkonstruktion gelagert, so daß zum Warten der Tropfenabscheider lediglich das Tropfenabscheiderpaket abgenommen bzw. ausgetauscht werden muß, während die Zwischenkonstruktion an Ort und Stelle verbleiben kann.

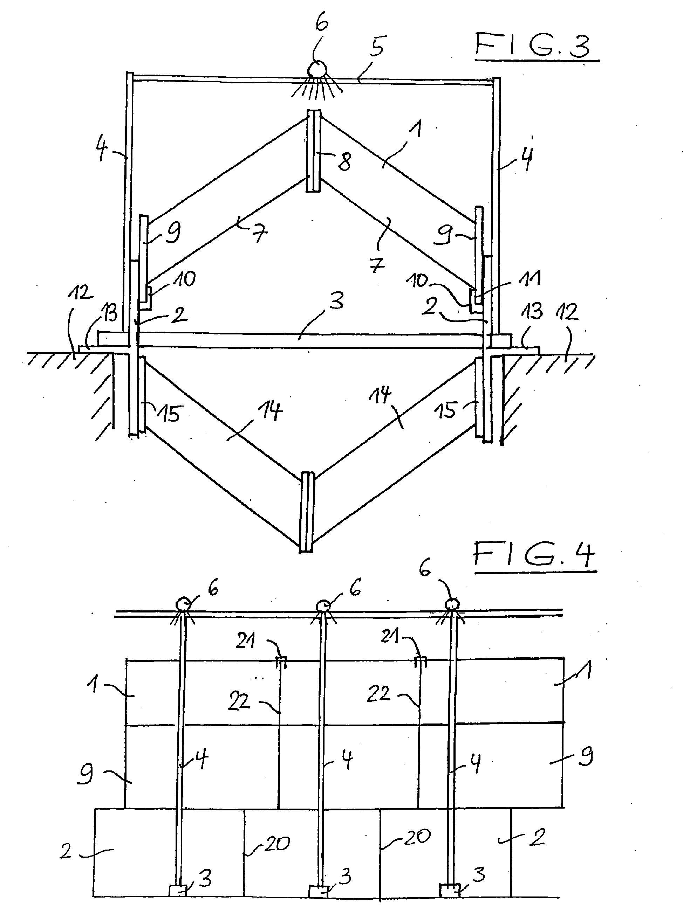

Figur 3 zeigt in schematischer Seitenansicht eine weitere Ausführungsform einer erfindungsgemäß ausgebildeten Tropfenabscheideranordnung, bei der zwei Reihen 1, 14 von Tropfenabscheiderprofilen übereinander angeordnet sind. Die obere Reihe 1 ist hierbei dachförmig ausgebildet, während die untere Reihe 14 V-förmig ausgebildet ist. Beide Tropfenabscheiderprofilreihen 1, 14 teilen sich eine gemeinsame Zwischenkonstruktion, die auch bei dieser Ausführungsform aus zwei Seitenwänden 2, zwei hieran befestigten Vertikalstäben 4, einem mittleren Querstab 3 und einer oberen Querstange 5 besteht, auf der eine Spüleinrichtung in Form eines Düsenrohres 6 angeordnet ist. Die Zwischenkonstruktion liegt mit Seitenflanschen 13 der Seitenwände 2 auf der Stützkonstruktion 12 auf.

Bei dieser Ausführungsform ist die obere Tropfenabscheiderprofilreihe 1 abnehmbar an den beiden Seitenwänden 2 angeordnet, während die untere Tropfenabscheiderprofilreihe 14 fest mit den Seitenwänden 2 verbunden ist. Die beiden Seitenwände 2 weisen auch bei dieser Ausführungsform jeweils einen sich nach innen und dann nach oben erstreckenden Ansatz 10 auf, der eine Nut 11 bildet, in der eine Endwand 9 der zu einem Paket zusammengefaßten Tropfenabscheiderprofile 7 abnehmbar und in Längsrichtung verschiebbar gelagert ist. Bei dieser Ausführungsform kann daher ebenfalls die Tropfenabscheiderprofilreihe 1 ohne weiteres von der Zwischenkonstruktion gelöst und ausgetauscht werden. Natürlich kann auch die untere Tropfenabscheiderprofilreihe 14 lösbar an der Zwischenkonstruktion angeordnet sein. Die hier dargestellte feste Anordnung ist rein beispielhaft.

Figur 4 zeigt eine schematische Ansicht der Tropfenabscheideranordnung der Figur 2 in Richtung des in Figur 2 dargestellten Pfeiles. Man erkennt hierbei die nebeneinander angeordneten Zwischenkonstruktionen, von denen die Seitenwände 2 mit den daran befestigten Vertikalstäben und den daran befestigten Querstäben 3 dargestellt sind. Bei dieser Ausführungsform sind die Reihen 1 der benachbarten dachförmig angeordneten Tropfenabscheiderprofile, die jeweils zu einem Paket zusammengefaßt sind, versetzt zu den Seitenwänden 2 angeordnet. Man erkennt, daß sich die jeweiligen unteren Endwände 9 der Tropfenabscheiderprofilpakete über die Stöße 20 zwischen den Seitenwänden 2 hinaus erstrecken, so daß somit kein von oben nach unten durchlaufender Spalt gebildet wird. Um einen gradlinigen Abschluß zwischen den Tropfenabscheiderprofilreihen 1 und den Seitenwänden zu bilden, kommen endseitig halbe Tropfenabscheiderprofilpakete zum Einsatz.

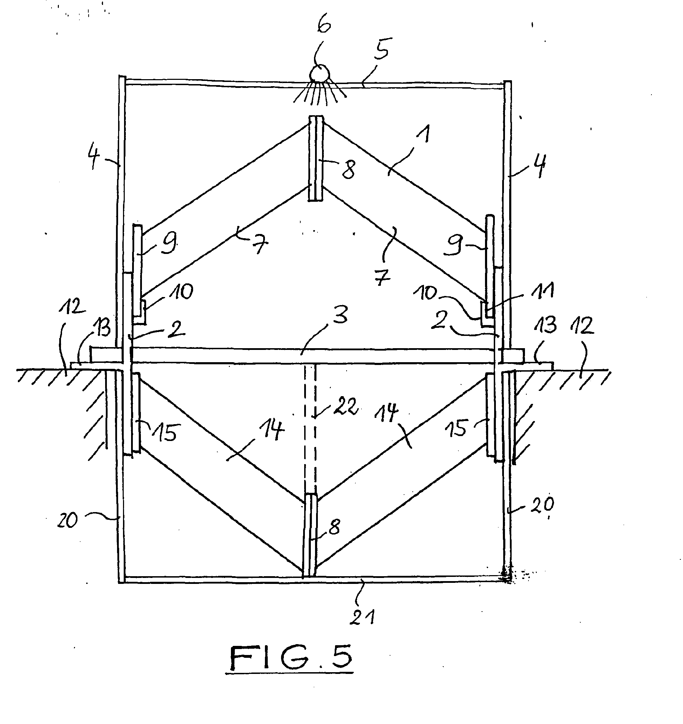

Figur 5 zeigt eine Seitenansicht noch einer weiteren Ausführungsform einer erfindungsgemäß ausgebildeten Tropfenabscheideranordnung mit zwei übereinander angeordneten Tropfenabscheiderprofilreihen, die sich eine gemeinsame Zwischenkonstruktion teilen. Diese Ausführungsform entspricht im wesentlichen der in Figur 3 gezeigten Ausführungsform, so daß nachfolgend nur noch auf die Unterschiede gegenüber der Ausführungsform der Figur 3 eingegangen wird.

Bei der in Figur 5 gezeigten Ausführungsform ist die untere Tropfenabscheiderprofilreihe 14, die V-förmig angeordnet ist, über zwei Endwände 15 fest mit dem unteren Bereich der Seitenwände 2 der gemeinsamen Zwischenkonstruktion verbunden. Desweiteren ist die untere Tropfenabscheidprofilreihe 14 mittig über ihre beiden mittleren Endwände 8 an einem Querstab 21 abgestützt, der von seitlichen, sich nach unten erstreckenden Vertikalstäben 20 getragen wird, welche wiederum an den beiden Seitenwänden 2 der Zwischenkonstruktion befestigt sind. Durch die Abstützung am Querstab 21 wird daher die untere Tropenabscheiderprofilreihe 14 noch sicherer gelagert als bei der Ausführungsform der Figur 3.

Zusätlich oder anstelle der Lagerung durch den unteren Querstab 21 kann die untere Tropfenabscheiderprofilreihe 14 auch am oberen Querstab 3 abgehängt sein, wie mit gestrichelten Linien bei 22 angedeutet ist.

In Figur 5 ist eine Ausführungsform dargestellt, bei der die untere Tropfenabscheiderprofilreihe 1 über Endwände 15 fest mit den Seitenwänden 2 der Zwischenkonstruktion verbunden (verschweißt) ist. Anstelle dieser festen Verbindung kann die untere Tropfenabscheiderprofilreihe 14 jedoch auch wie die obere Reihe 1 abnehmbar an den Seitenwänden 2 gelagert sein, wobei in diesem Fall entsprechende Ansätze 10 an den Seitenwänden 2 vorgesehen sein können. Die Abstützung der unteren Tropfenabscheiderprofilreihe 14 am unteren Querstab 21 erfolgt vorzugsweise über eine Verschraubung. Der untere Querstab 21 kann natürlich ebenfalls zur Anordnung von Spüleinrichtungen dienen, die die untere Tropfenabscheiderprofilreihe 14 seitlich von unten besprühen können.

## Patentansprüche

1. Tropfenabscheideranordnung für Gaswäscher, Kühltürme u. dgl. mit mindestens einer geneigt, dachförmig oder V-förmig in Bezug auf den Gasstrom angeordneten Reihe (1, 14) von parallelen Tropfenabscheiderprofilen (7), einer Zwischenkonstruktion zur Lagerung und Stabilisierung der Tropfenabscheiderprofilreihe (1, 14) und zur Lagerung einer Spüleinrichtung zum Spülen der Tropfenabscheiderprofilreihe (1, 14), die mindestens eine Seitenwand (2) für die Tropfenabscheiderprofilreihe (1, 14) und ein hiermit verbundenes Tragelement für die Spüleinrichtung umfasst, und einer Stützkonstruktion (12) zum Abstützen der Zwischenkonstruktion, wobei mehrere benachbarte Tropfenabscheiderprofile (7) mit Hilfe einer Endwand (9) zu einem Tropfenabscheiderprofilpaket zusammengefasst sind und die Endwand (9) in Querrichtung derselben im Wesentlichen unverschiebbar mit der Seitenwand (2) verbunden, jedoch von dieser abnehmbar ist, **dadurch gekennzeichnet, dass** die Seitenwand (2) einen nach innen vorstehenden und dann nach oben ragenden Ansatz (10) aufweist, der eine Aufnahme- und Führungsnut (11) bildet, und dass die Endwand (9) mit dem Tropfenabscheiderprofilpaket in Längsrichtung derselben verschiebbar in der Aufnahme- und Führungsnut (11) der Seitenwand (2) gelagert ist.

2. Tropfenabscheideranordnung nach Anspruch 1,
**dadurch gekennzeichnet, dass** sie eine Vielzahl von nebeneinander angeordneten Tropfenabscheiderprofilpaketen aufweist, die über leicht lösbare Fixiereinrichtungen (21) miteinander verbunden sind.

3. Tropfenabscheideranordnung nach Anspruch 2, **dadurch gekennzeichnet, dass** die nebeneinander angeordneten Tropfenabscheiderprofilpakete miteinander verklemmt sind.

4. Tropfenabscheideranordnung nach einem der vorangehenden Ansprüche, **dadurch gekennzeichnet, dass** sie eine Vielzahl von nebeneinander angeordneten Zwischenkonstruktionen aufweist.

5. Tropfenabscheideranordnung nach Anspruch 4, **dadurch gekennzeichnet, dass** die Stöße (20) der Seitenwände (2) der nebeneinander angeordneten Zwischenkonstruktionen im Abstand von den Stößen (22) der Endwände (9) der nebeneinander angeordneten Tropfenabscheiderprofilpakete vorgesehen sind.

6. Tropfenabscheideranordnung nach einem der vorangehenden Ansprüche, **dadurch gekennzeichnet, dass** die Zwischenkonstruktion mindestens einen mit der Seitenwand (2) verbundenen Querträger (3) aufweist.

7. Tropfenabscheideranordnung nach einem der vorangehenden Ansprüche, **dadurch gekennzeichnet, dass** die entgegengesetzt zueinander geneigten Tropfenabscheiderprofile (7) eines dachförmig oder V-förmig ausgebildeten Paketes über Endplatten (8) lösbar verbunden sind.

8. Tropfenabscheideranordnung nach Anspruch 7, **dadurch gekennzeichnet, dass** die Endplatten (8) der entgegengesetzt geneigten Tropfenabscheiderprofile (7) eines Paketes durch seitliche Verriegelung lösbar aneinander befestigt sind.

9. Tropfenabscheideranordnung nach einem der vorangehenden Ansprüche, **dadurch gekennzeichnet, dass** sie zwei übereinander angeordnete Reihen (1, 14) von Tropfenabscheiderprofilen (7) aufweist, von denen die obere Reihe (1) dachförmig und die unter Reihe (14) V-förmig ausgebildet sind.

10. Tropfenabscheideranordnung nach einem der vorangehenden Ansprüche, **dadurch gekennzeichnet, dass** sie zwei übereinander angeordnete Reihen von Tropfenabscheiderprofilen aufweist, von denen die obere Reihe V-förmig und die untere Reihe dachförmig ausgebildet sind.

11. Tropfenabscheideranordnung nach einem der vorangehenden Ansprüche, **dadurch gekennzeichnet, dass** sie zwei übereinander angeordnete Reihen (1, 14) von Tropfenabscheiderprofilen (7) aufweist, die eine gemeinsame Zwischenkonstruktion besitzen, welche eine Seitenwand (2) aufweist, an der mindestens die Endwand (9) eines Tropfenabscheiderprofilpaketes einer Reihe (1) abnehmbar und in Längsrichtung der Seitenwand (2) verschiebbar sowie in Querrichtung derselben im wesentlichen unverschiebbar gelagert ist.

12. Tropfenabscheideranordnung nach Anspruch 11, **dadurch gekennzeichnet, dass** ein Tropfenabscheiderprofilpaket der anderen Reihe (14) fest an der Seitenwand (2) angebracht ist.

13. Tropfenabscheideranordnung nach einem der vorangehenden Ansprüche, **dadurch gekennzeichnet, dass** sich eine V-förmig angeordnete Tropfenabscheiderprofilreihe (14) mittig auf einem Querstab (21) der Zwischenkonstruktion abstützt.

14. Tropfenabscheideranordnung nach einem der vorangehenden Ansprüche, **dadurch gekennzeichnet, dass** eine V-förmig angeordnete Tropfenabscheiderprofilreihe (14) mittig an einem oberen Querelement (3) der Zwischenkonstruktion angehängt ist.

## Claims

1. A droplet separator arrangement for gas washers, cooling towers etc. comprising at least one row (1, 14) of parallel droplet separator profiles (7) arranged in an inclined, roof-like or V-like manner with respect to the gas flow, an intermediate construction for the support and the stabilization of the droplet separator profile row (1, 14) and for the support of rinsing means for rinsing the droplet separator profile row (1, 14), said intermediate construction including at least one sidewall (2) for the droplet separator profile row (1, 14) and a carrier member for the rinsing means connected with the sidewall (2), and a support construction (12) for supporting the intermediate construction wherein several adjacent droplet separator profiles (7) are combined to a droplet separator profile package by means of an end wall (9) and the end wall (9) is connected to the sidewall (2) substantially undisplaceably in cross-direction of the same, however, can be taken off from the same, **characterized in that** the sidewall (2) has an inwardly projecting and then upwardly extending lug (10) forming a reception and guide groove (11), and that the end wall (9) with the droplet separator profile package is positioned in the reception and guide groove (11) of the sidewall (2) displaceably in longitudinal direction of the same.

2. The droplet separator arrangement according to claim 1, **characterized in that** it includes a plurality of adjacent droplet separator profile packages which are connected by means of simply removable fixing means (21).

3. The droplet separator arrangement according to claim 2, **characterized in that** the adjacent droplet separator profile packages are clamped with one another.

4. The droplet separator arrangement according to one of the preceding claims, **characterized in that** it includes a plurality of adjacent intermediate constructions.

5. The droplet separator arrangement according to claim 4, **characterized in that** the joints (20) of the sidewalls (2) of the adjacent intermediate constructions are spaced from the joints (22) of the end walls (9) of the adjacent droplet separator profile packages.

6. The droplet separator arrangement according to one of the preceding claims, **characterized in that** the intermediate construction has at least one cross beam (3) connected to the sidewall (2).

7. The droplet separator arrangement according to one of the preceding claims, **characterized in that** the oppositely inclined droplet separator profiles (7) of a roof-like or V-like package are removably connected by means of end plates (8).

8. The droplet separator arrangement according to claim 7, **characterized in that** the end plates (8) of the oppositely inclined droplet separator profiles (7) of a package are removably fixed to one another by lateral locking.

9. The droplet separator arrangement according to one of the preceding claims, **characterized in that** it includes two rows (1, 14) of droplet separator profiles (7) arranged one above the other of which the upper row (1) is formed in a roof-like manner and the lower row (14) is formed in a V-like manner.

10. The droplet separator arrangement according to one of the preceding claims, **characterized in that** it includes two rows of droplet separator profiles arranged one above the other of which the upper row is formed in a V-like manner and the lower row is formed in a roof-like manner.

11. The droplet separator arrangement according to one of the preceding claims, **characterized in that** it includes two rows (1, 14) of droplet separator profiles (7) arranged one above the other and having a common intermediate construction which includes a sidewall (2) at which at least the end wall (9) of a droplet separator profile package of one row (1) is supported so that it can be taken off and is displaceable in longitudinal direction of the sidewall (2) and is substantially undisplaceable in cross-direction of the same.

12. The droplet separator arrangement according to claim 11, **characterized in that** a droplet separator profile package of the other row (14) is fixedly mounted at the sidewall (2).

13. The droplet separator arrangement according to one of the preceding claims, **characterized in that** a V-like droplet separator profile row (14) is centrally supported at a cross-rod (21) of the intermediate construction.

14. The droplet separator arrangement according to one of the preceding claims, **characterized in that** a V-like droplet separator profile row (14) is centrally suspended at an upper cross member (3) of the intermediate construction.

## Revendications

1. Système pare-gouttes pour des épurateurs de gaz, des tours de refroidissement et similaires, comportant au moins une rangée (1, 14) de profilés de pare-gouttes (7) parallèles, disposée de manière inclinée et en forme de V ou en forme de V inversé par rapport au flux de gaz, comportant une construction intermédiaire destinée à loger et à stabiliser des rangées de profilés de pare-gouttes (1, 14) et destinée à loger un dispositif de lavage destiné à laver la rangée de profilés de pare-gouttes (1, 14), laquelle rangée comporte au moins une paroi latérale (2) pour la rangée de profilés de pare-gouttes (1, 14) et un élément porteur relié à cette dernière pour le dispositif de lavage, et comportant une construction de support (12) destinée à supporter la construction intermédiaire, plusieurs profilés de pare-gouttes (7) adjacents étant rassemblés pour former un paquet de profilés de pare-gouttes à l'aide d'une paroi d'extrémité (9) et la paroi d'extrémité (9) étant reliée à la paroi latérale (2) de manière essentiellement indéplaçable dans une direction transversale, pouvant toutefois être séparée de cette dernière, **caractérisé en ce que** la paroi latérale (2) présente une saillie (10) faisant saillie vers l'intérieur puis dépassant vers le haut, laquelle saillie forme une rainure (11) de réception et de guidage, et **en ce que** la paroi d'extrémité (9) est logée de manière à pouvoir être déplacée dans la rainure (11) de réception et de guidage de la paroi latérale (2) avec le paquet de profilés de pare-gouttes dans sa direction longitudinale.

2. Système pare-gouttes selon la revendication 1, **caractérisé en ce qu'**il présente une multitude de paquets de profilés de pare-gouttes disposés les uns à côté des autres, lesquels paquets sont reliés entre eux par l'intermédiaire de dispositifs de fixation (21) facilement amovibles.

3. Système pare-gouttes selon la revendication 2, **caractérisé en ce que** les paquets de profilés de pare-gouttes disposés les uns à côté des autres sont coincés entre eux.

4. Système pare-gouttes selon l'une quelconque des revendications précédentes, **caractérisé en ce qu'**il présente une multitude de constructions intermédiaires disposées les unes à côté des autres.

5. Système pare-gouttes selon la revendication 4, **caractérisé en ce que** les joints (20) des parois latérales (2) des constructions intermédiaires disposées les unes à côté des autres sont prévus à distance des joints (22) des parois d'extrémité (9) des paquets de profilés de pare-gouttes disposés les uns à côté des autres.

6. Système pare-gouttes selon l'une quelconque des revendications précédentes, **caractérisé en ce que** la construction intermédiaire présente au moins un support transversal (3) relié à la paroi latérale (2).

7. Système pare-gouttes selon l'une quelconque des revendications précédentes, **caractérisé en ce que** les profilés de pare-gouttes (7) d'un paquet réalisé en forme de V ou de V inversé, inclinés de manière opposée les uns par rapport aux autres, sont reliés de manière amovible par l'intermédiaire de plaques d'extrémité (8).

8. Système pare-gouttes selon la revendication 7, **caractérisé en ce que** les plaques d'extrémité (8) des profilés de pare-gouttes (7) d'un paquet inclinés de manière opposée sont fixées par verrouillage latéral de manière amovible les unes contre les autres.

9. Système pare-gouttes selon l'une quelconque des revendications précédentes, **caractérisé en ce qu'**il présente deux rangées (1, 14) de profilés de pare-gouttes (7) disposées l'une au-dessus de l'autre, parmi lesquelles la rangée supérieure (1) est réalisée en forme de V inversé et la rangée inférieure (14) en forme de V.

10. Système pare-gouttes selon l'une quelconque des revendications précédentes, **caractérisé en ce qu'**il présente deux rangées de profilés de pare-gouttes disposées l'une au-dessus de l'autre, parmi lesquelles la rangée supérieure est réalisée en forme de V et la rangée inférieure en forme de V inversé.

11. Système pare-gouttes selon l'une quelconque des revendications précédentes, **caractérisé en ce qu'**il présente deux rangées (1, 14) de profilés de pare-gouttes (7) disposées l'une au-dessus de l'autre, lesquelles ont une construction intermédiaire commune présentant une paroi latérale (2) contre laquelle au moins la paroi d'extrémité (9) d'un paquet de profilés de pare-gouttes d'une rangée (1) est logée de manière à pouvoir être séparée et de manière à pouvoir être déplacée dans le sens longitudinal de la paroi latérale (2) et logée de manière essentiellement indéplaçable dans le sens transversal de la paroi latérale.

12. Système pare-gouttes selon la revendication 11, **caractérisé en ce qu'**un paquet de profilés de pare-gouttes de l'autre rangée (14) est apposé de manière fixe sur la paroi latérale (2).

13. Système pare-gouttes selon l'une quelconque des revendications précédentes, **caractérisé en ce qu'**une rangée de profilés de pare-gouttes (14) disposée en forme de V s'appuie sur une barre transversale (21) de la construction intermédiaire en son centre.

14. Système pare-gouttes selon l'une quelconque des revendications précédentes, **caractérisé en ce qu'**une rangée de profilés de pare-gouttes (14) disposée en forme de V est suspendue au niveau du centre d'un élément transversal supérieur (3) de la construction intermédiaire.
